# FASCICULE DE BREVET EUROPEEN

(11) **EP 3 957 893 B1**
(45) Date de publication et mention de la délivrance du brevet: **01.04.2026**
(21) Numéro de dépôt: 21191350.4
(22) Date de dépôt: 13.08.2021
(51) Int. Cl.: F16L 37/091, F16L 25/00, F16L 25/14

(54) **ENSEMBLE COMPRENANT UN DISPOSITIF DE RACCORDEMENT**
ANORDNUNG MIT EINER VERBINDUNGSVORRICHTUNG
ASSEMBLY COMPRISING A CONNECTION DEVICE

(30) Priorité: 19.08.2020 FR 2008569
(43) Date de publication de la demande: 23.02.2022
(73) Titulaire: Parker Hannifin EMEA S.à.r.l., 1163 Etoy (CH)
(72) Inventeur: GUILLARD, Philippe, 35760 SAINT-GREGOIRE (FR)
(74) Mandataire: Cabinet Boettcher

(56) Documents cités:
- WO-A1-2019/211478
- FR-A1- 2 489 473
- US-A- 5 681 061
- US-A1- 2017 089 497

## Description

La présente invention concerne le domaine du transport de fluides liquides ou gazeux et plus particulièrement un dispositif de raccordement d'un tube de type « cartouche » destiné à réaliser l'ancrage d'un tube dans un logement d'un élément de circuit ainsi que l'étanchéité du raccordement ainsi formé.

### ARRIERE PLAN DE L'INVENTION

On connaît des dispositifs de raccordement rapide de type cartouche qui sont destinés à être insérés dans un logement cylindrique ménagé dans un élément d'un circuit de transport de fluide tel qu'une pompe, un distributeur, un actionneur, un module pneumatique, un régulateur de débit ou de pression ou encore un tube.

Un tel dispositif comprend généralement un insert tubulaire pourvu extérieurement de moyens d'ancrage du dispositif dans une première section du logement et intérieurement d'une rondelle dentée de retenue d'un tube. Un poussoir de déconnexion tubulaire est le plus souvent monté à coulissement dans un canal de l'insert tubulaire, entre une position sortie et une position enfoncée dans laquelle le poussoir agit sur les dents de la rondelle afin de permettre la libération du tube. L'étanchéité du raccord est assurée au moyen d'un joint d'étanchéité livré séparément de l'insert pour être logé dans une deuxième section du logement de plus petit diamètre que la première section lors de l'introduction dudit insert à l'intérieur du logement.

Les documents US 5 681 061 A et FR 2 489 473 A1 montrent de tels dispositifs de raccordement rapide de type cartouche.

Les moyens d'ancrage comprennent généralement une pluralité d'aspérités annulaires ménagées sur une face extérieure de l'insert et présentant dans un plan de coupe radial de l'insert un profil en forme de dents de sapin de manière à permettre audit insert d'être engagé et ancré dans le logement.

Si de telles aspérités s'avèrent particulièrement efficaces pour empêcher toute éjection de l'insert due à la pression du fluide circulant dans le circuit, elles rendent par la même occasion difficile voire impossible son extraction du logement. En effet, au fur et à mesure qu'un effort de traction est exercé sur l'insert, les aspérités sont amenées à mordre dans une surface intérieure du logement et à s'opposer au retrait dudit insert.

Dès lors, une fois l'insert introduit dans le logement, il devient difficile voire impossible de changer de référence d'insert ni même de joint d'étanchéité, notamment lorsque ce dernier a été endommagé par l'insertion d'un tube métallique non ébavuré ou qu'il a été déterminé que sa nature n'était pas chimiquement compatible avec le fluide destiné à circuler dans le circuit.

Qui plus est, l'impossibilité de démonter l'insert du logement empêche le tri sélectif des composants en fin de vie de l'élément sur lequel est assemblé l'insert.

### OBJET DE L'INVENTION

L'invention a donc pour but de proposer un dispositif de raccordement d'un tube de type cartouche permettant d'obvier au moins en partie aux problèmes précités.

### RESUME DE L'INVENTION

A cet effet, l'invention propose un dispositif de raccordement d'un tube se présentant sous forme de cartouche insérable dans un logement cylindrique d'un élément de circuit. Le dispositif comprend un insert tubulaire possédant extérieurement un moyen d'ancrage de l'insert dans le logement et intérieurement des moyens de retenue d'une portion d'extrémité du tube dans l'insert.

Selon l'invention, le moyen d'ancrage consiste en au moins une aspérité hélicoïdale formant un filetage externe à l'insert, et l'insert comporte au moins une empreinte d'entraînement en rotation de l'insert autour de son axe longitudinal.

Ainsi, l'aspérité hélicoïdale permet à la fois d'assurer l'ancrage de l'insert dans l'élément de circuit, mais aussi son extraction en insérant un outil dans l'empreinte de manière à entraîner en rotation l'insert autour de son axe longitudinal et ainsi engendrer son dévissage via l'aspérité hélicoïdale.

Selon l'invention, l'aspérité hélicoïdale présente dans un plan de coupe axial de l'insert un profil en forme de dent de sapin.

Selon l'invention, le profil de l'aspérité hélicoïdale comprend une pente d'introduction ayant un angle sensiblement compris entre 10 et 50 degrés et un épaulement arrière ayant un angle sensiblement compris entre 75 et 110 degrés.

De tels angles α, β offrent un bon compromis entre l'effort nécessaire à l'introduction en force de l'insert dans l'élément de circuit et la qualité de l'ancrage et du dévissage de l'insert vis-à-vis de l'élément de circuit.

Selon une caractéristique particulière, l'empreinte comprend au moins une fente radiale ménagée au niveau d'une extrémité libre de l'insert.

Selon une caractéristique particulière, l'empreinte comprend au moins une cannelure s'étendant axialement et ménagée à l'intérieur de l'insert.

De manière particulière, l'empreinte comporte deux cannelures s'étendant toutes deux axialement et étant diamétralement opposées.

De manière particulière, l'empreinte est composée de six cannelures (3.3") s'étendant toutes axialement formant ainsi un brochage à six pans.

Selon une caractéristique particulière, une extrémité libre de l'insert comporte une collerette pourvue d'un brochage à plusieurs pans formant l'empreinte.

Selon une caractéristique particulière, les moyens de retenue comprennent une rondelle dentée immobilisée axialement dans l'insert.

Selon une caractéristique particulière, un organe de déconnexion est monté coulissant dans l'insert entre une position sortie et une position enfoncée dans laquelle l'organe de déconnexion agit sur les moyens de retenue afin de permettre la libération du tube 100.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en coupe axiale d'un dispositif de raccordement selon un mode de réalisation particulier de l'invention, représenté avant son introduction à l'intérieur du logement de l'élément de circuit ;
- la figure 2 est une vue analogue à la figure 1, représentant le dispositif de raccordement pendant son introduction en force dans le logement de l'élément de circuit ;
- la figure 3 est une vue perspective du dispositif de raccordement illustré à la figure 1 avec un agrandissement en perspective d'une partie dudit dispositif ;
- la figure 4 est une vue en coupe axiale de la partie du dispositif illustrée à la figure 3 ;
- la figure 5 est une vue analogue à la figure 3, représentant une première variante du dispositif de raccordement illustré à la figure 1 ;
- la figure 6 est une vue analogue à la figure 3, représentant une deuxième variante du dispositif de raccordement illustré à la figure 1 ;
- la figure 7 est une vue analogue à la figure 3, représentant une troisième variante du dispositif de raccordement illustré à la figure 1.

### DESCRIPTION DETAILLEE DE L'INVENTION

L'invention est ici décrite en application au raccordement d'un tube 100 formant un premier conduit de transport de fluide à un deuxième conduit de transport de fluide formé par un élément de circuit 200 émetteur ou récepteur de fluide.

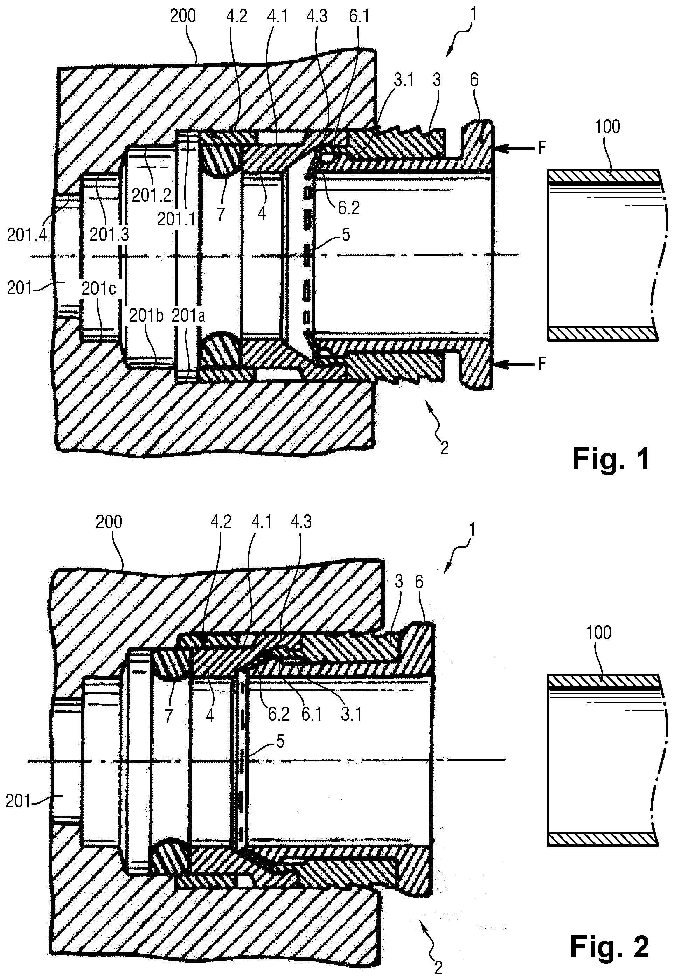

En référence aux figures 1 à 4, un dispositif de raccordement, généralement désigné en 1, se présente sous la forme d'une cartouche insérable dans un logement 201 cylindrique de l'élément de circuit 200.

Le dispositif 1 comprend un insert 2 de forme globalement tubulaire destiné à venir se loger dans le logement 201. L'insert 2 comporte ici deux parties : un corps 3 tubulaire et un support de joint 4. Les deux parties 3 et 4 définissent entre elles une gorge intérieure qui constitue un logement pour une rondelle 5 pourvue de dents formant des moyens de retenue du tube 100 dans l'insert 2. La rondelle 5, qui est connue en elle-même, est élastiquement déformable et sensiblement tronconique, sa circonférence intérieure étant de diamètre inférieur à celui du tube 100.

Un poussoir 6 tubulaire est monté pour coulisser axialement à l'intérieur du corps 3 de l'insert 2 entre une positon sortie dite « inactive » dans laquelle le poussoir 6 est en butée par un épaulement 6.1 contre un épaulement 3.1 du corps 3, la rondelle 5 étant alors simplement en appui sur une extrémité 6.2 du poussoir 6 (figure 1), et une position enfoncée dite « active » dans laquelle les épaulements 3.1 et 6.1 sont espacés l'un de l'autre et l'extrémité 6.2 du poussoir 6 soulève les dents de la rondelle 5 (figure 2). En outre, le poussoir 6 présente intérieurement un diamètre voisin de celui du tube 100.

Le support de joint 4 de l'insert 2 comporte un nez 4.1 ayant un diamètre extérieur inférieur au diamètre du logement 201 de l'élément 200. Une bague 4.2 de protection ayant un diamètre intérieur voisin du diamètre extérieur du nez 4.1 est montée à une extrémité libre du nez 4.1 et s'étend axialement en saillie par rapport audit nez 4.1 pour recevoir intérieurement un joint d'étanchéité 7. Le joint d'étanchéité 7 présente ici une surface extérieure cylindrique de diamètre légèrement supérieur au diamètre intérieur de la bague 4.2, et une surface intérieure torique de diamètre intérieur légèrement inférieur au diamètre extérieur du tube 100. La bague 4.2 est immobilisée axialement sur le nez 4.1 par un moyen de blocage de faible résistance. En l'espèce, le nez 4.1 et la bague 4.2 sont ici réalisées en une seule pièce reliée par une zone de liaison qui est de faibles caractéristiques mécaniques, mais il est également possible de réaliser le moyen de blocage de la bague 4.2 sous d'autres formes.

Le support de joint 4 comporte en outre une portion 4.3 présentant un diamètre extérieur légèrement inférieur au diamètre du logement 201. La portion 4.3 forme un épaulement qui présente une surface transversale en regard de la bague 4.2 et qui constitue une butée pour celle-ci. Une telle disposition est bien connue dans ce type de raccord.

Avant montage, il faut s'assurer que l'élément 200 soit convenablement alésé pour former le logement 201 cylindrique destiné à recevoir le dispositif 1.

Le logement 201 se présente ici sous la forme d'un alésage divisé axialement en quatre parties. On distingue de droite à gauche une première partie 201.1 de grand diamètre qui est destinée à recevoir l'insert 2 et qui a une extrémité débouchant sur une surface externe de l'élément 200, une deuxième partie 201.2 de diamètre inférieur à celui de la première partie 201.1 et destinée à recevoir le joint d'étanchéité 7, une troisième partie 201.3 de diamètre inférieur à celui de la deuxième partie 201.2 et destinée à recevoir une portion d'extrémité du tube 100, et une quatrième partie 201.4 de diamètre inférieur à celui de la troisième partie 201.3 permettant le transport de fluide.

Entre les première et deuxième parties 201.1, 201.2, une première face d'appui 201a transversale constitue une butée à l'enfoncement de l'insert 2 dans le logement 201.

Entre les deuxième et troisième parties 201.2, 201.3, une deuxième face d'appui 201b transversale constitue une butée à l'enfoncement du joint d'étanchéité 7 dans le logement 201.

Entre les troisième et quatrième parties 201.3, 201.4, une troisième face d'appui 201c transversale constitue une butée à l'enfoncement du tube 100.

Selon une caractéristique essentielle de l'invention, le corps 3 de l'insert 2 est pourvu extérieurement d'une aspérité hélicoïdale 3.2 formant un filetage externe.

Optionnellement l'aspérité hélicoïdale présente, dans un plan de coupe axial de l'insert 2, un profil en forme de dents de sapin. Ceci permet à l'insert 2 d'être plus aisément engagé en force et ancré dans le logement 201.

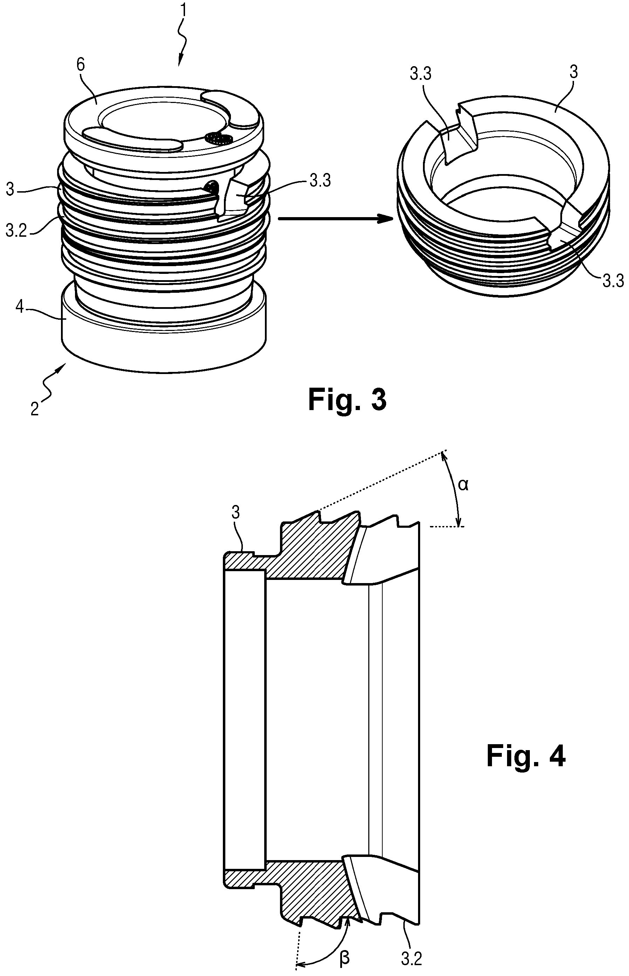

Alors que le profil d'un filetage trapézoïdal normalisé présente une pente d'introduction et un épaulement arrière formant respectivement un angle égal à 60 et 120 degrés avec l'axe longitudinal du filetage, le profil de l'aspérité hélicoïdale 3.2 présente ici une pente d'introduction formant un angle α sensiblement compris entre 10 et 50 degrés avec l'axe longitudinal de l'insert, et un épaulement arrière ayant un angle β sensiblement compris entre 75 et 110 degrés avec ce même axe (figure 4) .

Selon une autre caractéristique essentielle de l'invention, le corps 3 de l'insert 2 présente une empreinte d'entraînement en rotation de l'insert autour de son axe longitudinal. Comme visible sur la figure 3, l'empreinte consiste par exemple en une fente radiale 3.3 ménagée à l'extrémité libre de l'insert 2 pour y introduire un outil tel une pointe plate d'un tournevis.

Ainsi décrit, le dispositif 1 forme une cartouche destinée à être emmanchée de manière étanche dans le logement 201 de l'élément 200.

Les différentes étapes de l'insertion du dispositif de raccordement 1 dans le logement 200 vont maintenant être détaillées.

Conformément à la figure 1, un effort F de poussée axiale, symbolisé par une flèche, est exercé sur le poussoir 6 pour engager l'insert 2 dans le logement 201. Dans un premier temps, l'aspérité hélicoïdale 3.2 de l'insert 2 coopère avec un chanfrein dudit logement 201 et s'oppose à l'insertion du dispositif 1 dans ledit logement 201.

Dès lors, l'effort F entraîne un déplacement axial du poussoir 6 qui coulisse de la position sortie vers la position enfoncée. Lorsque la bague 4.2 parvient en butée contre la première face d'appui 201a du logement 201, l'effort F engendré sur la zone de liaison de la bague 4.2 au nez 4.1 est suffisant pour rompre ladite zone de liaison. Le nez 4.1 pousse alors le joint 7 dans la deuxième partie 201.2 du logement 201 (figure 2).

Dans l'exemple illustré, le nez 4.1 présente une longueur axiale légèrement supérieure à celle de la bague 4.2. Ainsi, lorsque la bague 4.2 parvient en butée contre une face transversale du nez 4.1, le joint 7 est entièrement dégagé de la bague 4.2. En outre, le fait que la bague 4.2 vienne en butée contre la face transversale du nez 4.1 permet d'éviter un écrasement du joint 7 entre une face terminale du nez 4.1 et la deuxième face d'appui 201b transversale du logement 201.

En stoppant l'effort F de poussée axiale, les dents de la rondelle 5 d'accrochage tendent à retrouver leur position de repos et repoussent ainsi le poussoir 6 qui coulisse alors de la position enfoncée vers la position sortie.

Au montage, le dispositif 1, et en particulier son insert 2, est donc inséré en force dans le logement 201 de l'élément 200 jusqu'à ce que la bague 4.2 soit en butée contre la face transversale du nez 4.1.

Une fois le dispositif 1 correctement ancré dans le logement 201 de l'élément 200, le tube 100 peut être emmanché dans le poussoir 6 jusqu'à ce que la portion d'extrémité du tube 100 vienne en butée contre la troisième face d'appui 201c du logement 201. De façon connue en soi, la rondelle 5 d'accrochage s'oppose alors au retrait du tube 100.

Pour extraire l'insert 2 de l'élément 200, le tube 100 est tout d'abord déconnecté de l'insert 2 via le poussoir 6 puis le poussoir 6 est éjecté du corps 3 de l'insert 2 en faisant par exemple levier sur le corps 3 via une pointe plate d'un tournevis. La pointe du tournevis est ensuite insérée dans la fente 3.3 ménagé dans le corps 3 de manière à entraîner en rotation l'insert 2 autour de son axe longitudinal et ainsi engendrer son dévissage via l'aspérité hélicoïdale 3.2. Au démontage, l'insert 2 est donc dévissé du logement 201.

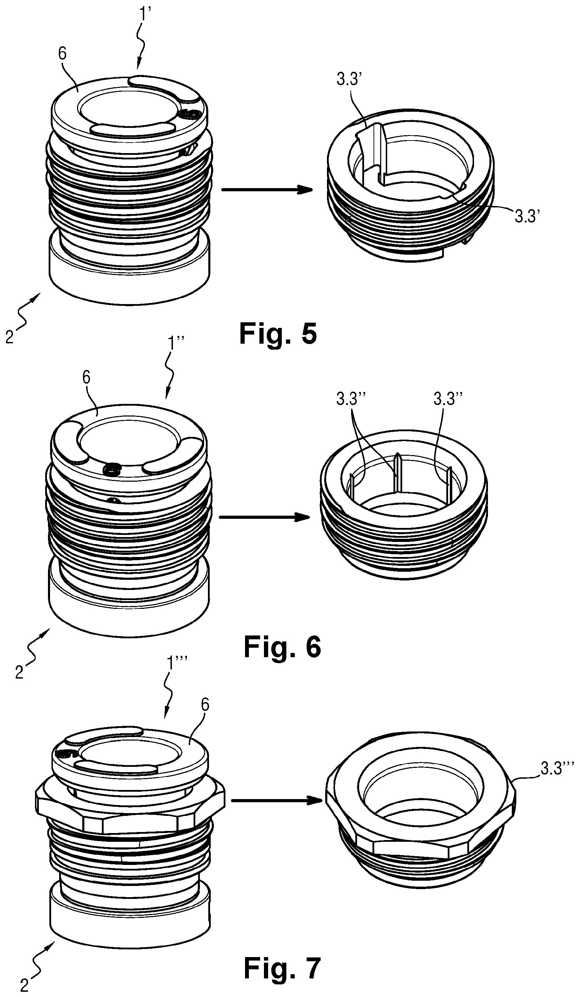

La figure 5 illustre un dispositif 1' de raccordement qui est une première variante du dispositif 1 illustré aux figures 1 à 4. Le dispositif 1' de raccordement diffère du dispositif 1 en ce que la fente 3.3 est remplacé par deux cannelures 3.3' axiales ménagées à l'intérieur de l'insert 2 de façon diamétralement opposée. Le dévissage de l'insert 2 peut alors être assuré via la pointe plate d'un tournevis introduite dans les cannelures 3.3'.

La figure 6 illustre un dispositif 1" de raccordement qui est une deuxième variante du dispositif 1 illustré aux figures 1 à 4. Le dispositif 1" de raccordement diffère des dispositifs 1 et 1' en ce que le corps 3 comporte six cannelures 3.3" axiales ménagées à l'intérieur de l'extrémité libre de l'insert 2 de façon à former un brochage à six pans. Le dévissage de l'insert 2 peut alors être assuré via une clé Allen.

La figure 7 illustre un dispositif 1‴ de raccordement qui est une troisième variante du dispositif 1 illustré aux figures 1 à 4. Le dispositif 1‴ de raccordement diffère des dispositifs 1, 1" et 1" en ce que l'extrémité libre du corps 3 comporte une collerette 3.3‴ pourvue extérieurement d'un brochage à six pans et destinée à être en butée contre une face d'appui de l'élément 200 de manière à être accessible depuis l'extérieur du logement 201. Le dévissage de l'insert 2 peut dès lors être assuré via une douille hexagonale à six pans. On notera qu'une telle empreinte d'entraînement en rotation de l'insert 2 a pour avantage qu'il n'est pas nécessaire d'éjecter le poussoir 6 pour dévisser l'insert 2.

Bien entendu, l'invention n'est pas limitée au mode de réalisation décrit mais englobe toute variante entrant dans le champ de l'invention telle que définie par les revendications.

La forme globale du profil de l'aspérité hélicoïdale 3.2 peut être différente de celui décrite. En particulier, les angles α et β pourront être différents de ceux décrits.

La forme globale de l'empreinte 3.3, 3.3', 3.3", 3.3‴ d'entraînement en rotation de l'insert 2 peut être différente de celui décrite, en particulier le nombre de fente, de cannelure ou de pan ainsi que leurs dispositions.

De manière générale, l'entraînement en rotation de l'insert 2 peut être assuré par toute empreinte ménagée dans l'insert 2 permettant un entraînement en rotation de l'insert 2 via un outil, quand bien même celui-ci serait spécifique.

Le corps 3 peut comporter plusieurs aspérités hélicoïdales 3.2 coopérant entre elles pour permettre un dévissage de l'insert 2.

Bien qu'ici la retenue de la portion d'extrémité du tube dans l'insert soit assurée par une rondelle intérieurement dentée, elle peut aussi être assuré par tout autre moyen tel que des bras élastiquement déformables formant une seule pièce avec le poussoir 6.

## Revendications

1. Ensemble comprenant un dispositif de raccordement (1) d'un tube (100) et un élément (200) de circuit comportant un alésage formant un logement (201) cylindrique, le dispositif formant une cartouche agencée pour être insérée dans l'alésage sous un effort (F) de poussée axiale et comprenant un insert (2) tubulaire possédant extérieurement un moyen d'ancrage de l'insert dans ledit alésage et intérieurement des moyens de retenue (5) d'une portion d'extrémité du tube dans l'insert, **caractérisé en ce que** le moyen d'ancrage consiste en au moins une aspérité hélicoïdale (3.2) formant un filetage externe à l'insert, et **en ce que** l'insert comporte au moins une empreinte (3.3, 3.3', 3.3", 3.3‴) d'entraînement en rotation de l'insert autour de son axe longitudinal, l'aspérité hélicoïdale présentant, dans un plan de coupe axial de l'insert, un profil en forme de dent de sapin qui comprend une pente d'introduction ayant un angle (α) sensiblement compris entre 10 et 50 degrés et un épaulement arrière ayant un angle (β) sensiblement compris entre 75 et 110 degrés.

2. Ensemble selon la revendication 1, dans lequel l'empreinte (3.2) comprend au moins une fente (3.3) radiale ménagée au niveau d'une extrémité libre de l'insert (2).

3. Ensemble selon la revendication 1, dans lequel l'empreinte comprend au moins une cannelure (3.3', 3.3") s'étendant axialement et ménagée à l'intérieur de l'insert.

4. Ensemble selon la revendication 3, dans lequel l'empreinte comporte deux cannelures (3.3') s'étendant toutes deux axialement et étant diamétralement opposées.

5. Ensemble selon la revendication 3, dans lequel l'empreinte est composée de six cannelures (3.3") s'étendant toutes axialement formant ainsi un brochage à six pans.

6. Ensemble selon la revendication 1, dans lequel une extrémité libre de l'insert (2) comporte une collerette (3.3‴) pourvue d'un brochage à plusieurs pans formant l'empreinte.

7. Ensemble selon l'une quelconque des revendications précédentes, dans lequel les moyens de retenue (5) comprennent une rondelle dentée immobilisée axialement dans l'insert (2).

8. Ensemble selon l'une quelconque des revendications précédentes, dans lequel un organe de déconnexion (6) est monté coulissant dans l'insert (2) entre une position sortie et une position enfoncée dans laquelle l'organe de déconnexion agit sur les moyens de retenue (5) afin de permettre la libération du tube (100).

## Patentansprüche

1. Anordnung, welche eine Kupplungsvorrichtung (1) zur Verbindung eines Rohres (100) und ein Kreislaufelement (200) mit einer Bohrung umfasst, die eine zylindrische Aufnahme (201) bildet, wobei die Vorrichtung eine Einbaupatrone bildet, die dafür ausgelegt ist, unter Aufwendung einer axialen Schubkraft (F) in die Bohrung eingeführt zu werden, und einen rohrförmigen Einsatz (2) umfasst, der außen mit einem Verankerungsmittel zur Verankerung des Einsatzes in der Bohrung und innen mit Haltemitteln (5) zum Zurückhalten eines Endabschnitts des Rohrs in dem Einsatz ausgestattet ist, **dadurch gekennzeichnet, dass** es sich bei dem Verankerungsmittel um zumindest eine wendelförmige Unebenheit (3.2) handelt, die an dem Einsatz ein Außengewinde bildet, und dass der Einsatz zumindest eine Drehantriebsprägung (3.3, 3.3', 3.3", 3.3‴) enthält, die dazu dient, den Einsatz um seine Längsachse zu drehen, wobei die wendelförmige Unebenheit in einer axialen Schnittebene des Einsatzes gesehen ein Tannenzahnprofil besitzt, das eine Einlaufschräge mit einem Winkel (α) von im Wesentlichen 10 bis 50 Grad und eine hintere Schulter mit einem Winkel (β) von im Wesentlichen 75 bis 110 Grad aufweist.

2. Anordnung nach Anspruch 1, wobei die Prägung (3.2) zumindest einen Radialschlitz (3.3) umfasst, der an einem freien Ende des Einsatzes (2) ausgebildet ist.

3. Anordnung nach Anspruch 1, wobei die Prägung zumindest eine Nut (3.3', 3.3") umfasst, die sich axial erstreckt und im Inneren des Einsatzes ausgebildet ist.

4. Anordnung nach Anspruch 3, wobei die Prägung zwei Nuten (3.3') umfasst, die sich beide axial erstrecken und einander diametral entgegengesetzt angeordnet sind.

5. Anordnung nach Anspruch 3, wobei die Prägung aus sechs Nuten (3.3") besteht, die sich alle axial erstrecken und so eine Sechskantbohrung bilden.

6. Anordnung nach Anspruch 1, wobei ein freies Ende des Einsatzes (2) einen Kragen (3.3‴) enthält, der mit einer die Prägung bildenden Mehrkantbohrung versehen ist.

7. Anordnung nach einem der vorhergehenden Ansprüche, wobei die Haltemittel (5) eine Zahnscheibe umfassen, die in dem Einsatz (2) axial gesichert ist.

8. Anordnung nach einem der vorhergehenden Ansprüche, wobei in dem Einsatz (2) ein Entkopplungsorgan (6) verschiebbar zwischen einer ausgefahrenen Stellung und einer eingeschobenen Stellung angebracht ist, in welcher das Entkopplungsorgan auf die Haltemittel (5) einwirkt, sodass das Rohr (100) freigegeben wird.

## Claims

1. Assembly comprising a device (1) for connecting a tube (100) and a circuit element (200) comprising a bore forming a cylindrical housing (201), the device forming a cartridge arranged to be inserted into the bore under an axial thrust force (F) and comprising a tubular insert (2) having externally means for anchoring the insert in said bore and internally means (5) for retaining an end portion of the tube in the insert,
**characterised in that** the anchoring means consists of at least one helical projection (3.2) forming a thread external to the insert, and **in that** the insert comprises at least one imprint (3.3, 3.3', 3.3", 3.3‴) for driving the insert in rotation about its longitudinal axis, the helical projection having, in an axial sectional plane of the insert, a profile in the form of a fir tooth which comprises an introduction slope having an angle (α) substantially between 10 and 50 degrees and a rear shoulder having an angle (β) substantially between 75 and 110 degrees.

2. Assembly according to claim 1, wherein the imprint (3.2) comprises at least one radial slot (3.3) arranged at a free end of the insert (2).

3. Assembly according to claim 1, wherein the imprint comprises at least one axially extending spline (3.3', 3.3") arranged inside the insert.

4. Assembly according to claim 3, wherein the imprint comprises two splines (3.3') both extending axially and being diametrically opposed.

5. Assembly according to claim 3, wherein the imprint is composed of six splines (3.3''), all extending axially, thus forming a hexagonal pin.

6. Assembly according to claim 1, wherein a free end of the insert (2) comprises a collar (3.3‴) provided with a multi-sided pin forming the imprint.

7. Assembly according to any one of the preceding claims, wherein the retaining means (5) comprise a toothed washer secured axially in the insert (2).

8. An assembly according to any one of the preceding claims, wherein a disconnection member (6) is slidably mounted in the insert (2) between an extended position and a depressed position in which the disconnection member acts on the retaining means (5) to allow the tube (100) to be released.
